# EUROPÄISCHE PATENTSCHRIFT

(11) **EP 2 828 322 B1**
(45) Veröffentlichungstag und Bekanntmachung des Hinweises auf die Patenterteilung: **30.12.2015**
(21) Anmeldenummer: 13709925.5
(22) Anmeldetag: 18.03.2013
(51) Int. Cl.: C08K 3/24, C08K 5/09, C08K 5/098

(54) **THERMOPLASTISCHE FORMMASSEN**
THERMOPLASTIC MOULDING COMPOSITIONS
MATIÈRES MOULABLES THERMOPLASTIQUES

(30) Priorität: 21.03.2012 EP 12160534
(43) Veröffentlichungstag der Anmeldung: 28.01.2015
(73) Patentinhaber: Lanxess Deutschland GmbH, 51369 Leverkusen (DE)
(72) Erfinder: BENIGHAUS, Tobias, 48145 Münster (DE); JOACHIMI, Detlev, 47800 Krefeld (DE); MARGRAF, Günter, 41539 Dormagen (DE); RUTHARD, Christian, 55124 Mainz (DE); SCHMIDT, Holger, 41541 Dormagen (DE)
(86) Internationale Anmeldenummer: PCT/EP2013/055579
(87) Internationale Veröffentlichungsnummer: WO 2013/139743

(56) Entgegenhaltungen:
- DE-A1-102008 052 055
- DE-A1-102008 053 797

## Beschreibung

Die vorliegende Erfindung betrifft thermoplastische Formmassen enthaltend als Stabilisator gegen thermooxidative Schädigung Eisenoxalat. Des Weiteren betrifft die Erfindung die Verwendung dieses Stabilisators zur Verbesserung der Stabilität thermoplastischer Formmassen gegen thermooxidative Schädigung und/oder photooxidative Schädigung sowie Verfahren zur Herstellung dieser Form-massen.

Thermoplastische Polymere, bevorzugt Polyamide oder Polyester, insbesondere teilkristalline Polyamide oder Polyester werden häufig als Werkstoffe für Formteile eingesetzt, die während ihrer Lebensdauer erhöhten Temperaturen über einen längeren Zeitraum ausgesetzt sind. Für eine Vielzahl von Anwendungen ist es dabei erforderlich, dass die Werkstoffe ausreichend stabil gegenüber der dabei auftretenden thermooxidativen Schädigung sind, insbesondere für Anwendungen im Motorraum von Kraftfahrzeugen.

Thermoplastische Formmassen zeigen im Allgemeinen eine Verschlechterung ihrer mechanischen Eigenschaften wenn sie über einen längeren Zeitraum erhöhten Temperaturen ausgesetzt werden. Dieser Effekt basiert primär auf der oxidativen Schädigung des Polymers bei erhöhten Temperaturen (thermooxidative Schädigung). Ein längerer Zeitraum im Sinne der vorliegenden Erfindung bedeutet länger als 100 Stunden, erhöhte Temperaturen im Sinne der vorliegenden Erfindung bedeutet höher als 80 °C.

Die Stabilität thermoplastischer Formmassen gegen thermooxidative Schädigung wird üblicherweise durch den Vergleich mechanischer Eigenschaften, insbesondere der Schlagzähigkeit, der im Zugversuch nach ISO 527 gemessenen Bruchspannung und Bruchdehnung sowie des E-Moduls bei definierter Temperatur über einen definierten Zeitraum beurteilt.

Zahlreiche Systeme zur Stabilisierung von thermoplastischen Polymeren, auch als Thermoplasten bezeichnet, gegen thermooxidative Schädigung und dem daraus resultierenden molekularen Abbau sind bekannt und wurden in der Literatur beschrieben. Eine Zusammenfassung findet sich im "Plastic Additives Handbook" (5th Edition, Herausgeber: Hans Zweifel, Carl Hanser Verlag, München 2001) auf den Seiten 10 bis 19 und 40 bis 92. In technischen Thermoplasten, insbesondere Polyamiden, werden üblicherweise Antioxidantien auf Basis sterisch gehinderter Phenole oder auf Basis aromatischer Amine als organische Stabilisatoren oder Systeme auf Basis von Kupferverbindungen als anorganische Stabilisatoren eingesetzt. Die genannten organischen Stabilisatoren werden im Allgemeinen für Temperaturen bis ca. 120 °C eingesetzt, einige sind auch bei höheren Temperaturen noch wirksam. Eine effektive Stabilisierung bei höheren Temperaturen bis ca. 140 °C wird üblicherweise durch Stabilisatorsysteme auf Basis von Mischungen aus Kupferhalogeniden und Alkalihalogeniden erreicht.

In den letzten Jahren sind die Anforderungen an die Gebrauchstemperaturen, bei denen thermoplastische Polymere wie Polyamide noch ausreichend stabil sind, deutlich gestiegen. In vielen Anwendungen ist eine Langzeitwärmestabilisierung gegen thermooxidativen Abbau bei 160°C oder auch 180 - 200°C gefordert.

DE-4305166 A1 beschreibt eine Verbesserung der kupferbasierten Thermostabilisierungen durch Zugabe von starken Reduktionsmitteln, die zu einer in-situ-Bildung von fein verteiltem elementarem Kupfer führt. DE-4305166 A1 zeigt zudem, dass kolloidales, elementares Kupfer, das nicht in-situ erzeugt wird, eine deutlich geringere Aktivität hinsichtlich einer Thermostabilisierung aufweist.

US-A 4347175 beschreibt ein Verfahren zur Stabilisierung von Polymeren durch Mischen der Polymeren mit multi-valenten Metall-Formiaten und Erhitzen der Mischung auf eine Temperatur oberhalb der Zersetzungstemperatur der multi-valenten Metall-Formiate.

Der thermooxidative Abbau von thermoplastischen Formmassen bei erhöhten Temperaturen über einen längeren Zeitraum lässt sich generell mit Stabilisatorsystemen nicht verhindern sondern nur zeitlich verzögern. Die Anforderungen an thermoplastische Formmassen bzw. an daraus herzustellenden Formteilen in Hochtemperaturanwendungen werden mit den aus dem Stand der Technik bekannten Systemen noch nicht ausreichend erfüllt. So erfahren beispielsweise die Schlagzähigkeit oder die Bruchspannung nach ~1000h Langzeitlagerung bei 180 - 200°C einen recht deutlichen Abfall auf meistens unter 50 % des Ausgangswertes.

Der vorliegenden Erfindung lag daher die Aufgabe zugrunde, ein Stabilisatorsystem und thermoplastische Formmassen enthaltend ein solches Stabilisatorsystem zur Verfügung zu stellen, wodurch eine weitere deutliche Verbesserung der Stabilisierung gegenüber thermooxidativer Schädigung im Vergleich zu den aus dem Stand der Technik bekannten Systemen ermöglicht wird.

Überraschend wurde nun gefunden, dass mit Eisenoxalat eine deutliche Verbesserung der Stabilität von Thermoplasten bzw. daraus herzustellender Formkörper gegenüber thermooxidativer Schädigung erreicht werden kann.

Die Lösung der Aufgabe und somit Gegenstand der vorliegenden Erfindung ist die Verwendung von Eisenoxalat zur Stabilisierung thermoplastischer Polymere bzw. auf thermoplastischen Polymeren basierenden Formmassen und daraus herzustellender Fasern, Folien oder Formteile gegen thermooxidative Schädigung und/oder gegen photooxidative Schädigung.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Gegenstand der vorliegenden Erfindung sind auch thermoplastische Formmassen enthaltend
(1) 10 bis 99,85 Gew.-% eines thermoplastischen Polymers oder einer Kombination unterschiedlicher thermoplastischer Polymere,
(2) 0,05 bis 10 Gew.-% Eisenoxalat, und
(3) 0,1 bis 70 Gew.-% weitere Zusatzstoffe, wobei die Summe der Gewichtsprozente stets 100 Gew.-% ist.

In einer bevorzugten Ausführungsform enthalten die erfindungsgemäßen thermoplastischen Formmassen zusätzlich zu den Komponenten (1) bis (3) noch (4) 5 - 70 Gew.-% Füll- oder Verstärkungsstoffe, bevorzugt Glasfasern oder Kohlefasern, besonders bevorzugt Glasfasern, wobei die Anteile der Komponenten (1) bis (3) so reduziert werden, dass die Summe aller Gewichtsprozente 100 ergibt.

Erfindungsgemäß bevorzugt sind thermoplastische Formmassen enthaltend
(1) 10 bis 99,75 Gew.-% eines thermoplastischen Polymers oder einer Kombination unterschiedlicher thermoplastischer Polymere,
(2) 0,05 bis 8 Gew.-%, bevorzugt 0,1 bis 5 Gew.-%, besonders bevorzugt 0,2 bis 3 Gew.-% Eisenoxalat, und
(3) 0,1 bis 70 Gew.-% weitere Zusatzstoffe, wobei die Summe der Gewichtsprozente stets 100 Gew.-% ist.

Die vorliegende Erfindung betrifft zudem die Verwendung der erfindungsgemäßen thermoplastischen Formmassen zur Herstellung von Fasern, Folien oder Formkörpern jeglicher Art.

Die vorliegende Erfindung betrifft aber auch ein Verfahren zur Thermostabilisierung thennoplastischer Polymere und daraus herzustellender Fasern, Folien oder Formkörper, indem man ein Stabilisatorsystem enthaltend wenigstens Eisenoxalat einsetzt.

Die vorliegende Anmeldung betrifft aber auch ein Verfahren zur Verringerung photooxidativer Schädigungen und/oder thermooxidativer Schädigungen thermoplastischer Polymere, bzw. an daraus herzustellenden Folien, Fasern oder Formteilen, indem man wenigstens Eisenoxalat zusetzt.

Die als Komponente (1) einzusetzenden thermoplastischen Polymere sind bevorzugt amorphe Polymere, thermoplastische Elastomere oder semi-kristalline Polymere. Besonders bevorzugt wird das erfindungsgemäße Stabilisatorsystem bei Polymeren angewandt, die bei HochtemperaturAnwendungen zum Einsatz kommen, ganz besonders bevorzugt bei semi-kristallinen Polymeren mit einem Schmelzpunkt von mindestens 180 °C oder amorphen Polymeren mit einer Glasübergangstemperatur von mindestens 150 °C.

Insbesondere bevorzugt als Komponente (1) einzusetzende amorphe Polymere sind amorphe Polyamide, amorphe Polyimide, amorphe Polyetherimide, amorphe Polysulfone oder amorphe Polyacrylate.

Insbesondere bevorzugt als Komponente (1) einzusetzende semi-kristalline Polymere sind semi-kristalline Polyphenylensulfide, semi-kristalline Polyester, semi-kristalline Polyetherketone oder semi-kristalline Polyamide, insbesondere semi-kristalline Polyester oder semi-kristalline Polyamide, insbesondere besonders bevorzugt semi-kristalline Polyamide.

In einer bevorzugten Ausführungsform wird als Komponente (1) auch ein Blend unterschiedlicher thermoplastischer Polymere eingesetzt.

Insbesondere ganz besonders bevorzugt wird als Komponente (1), also als semi-kristallines Polyamid, aliphatisches oder semi-aromatisches Polyamid, insbesondere Polyamid 6 oder Polyamid 66 mit relativen Lösungsviskositäten in m-Kresol von 2,0 bis 4,0, insbesondere ganz besonders bevorzugt Polyamid 6 mit einer relativen Lösungsviskosität in m-Kresol von 2,3 - 3,2 eingesetzt.

Bei Verfahren zur Bestimmung der relativen Lösungsviskosität werden die Durchlaufzeiten eines gelösten Polymers durch ein Ubbelohde-Viskosimeter gemessen, um anschließend den Viskositätsunterschied zwischen Polymerlösung und seinem Lösungsmittel, hier m-Kresol (1 %ige Lösung), zu bestimmen. Anwendbare Normen sind DIN 51562; DIN ISO 1628 oder entsprechende Normen.

Die in einer bevorzugten Ausführungsform einzusetzenden Blends enthalten als Komponente (1) bevorzugt Polyamid 6, Polyamid 66, Polyamid 46, Polyamid 12 oder Copolyamide. In einer alternativ bevorzugten Ausführungsform enthalten die Blends wenigstens eines der genannten Polyamide und wenigstens ein weiteres thermoplastisches Polymer der Reihe Polyphenylenoxid, Polyethylen oder Polypropylen.

Die in den erfindungsgemäßen thermoplastischen Formmassen bevorzugt einzusetzenden Polyamide können nach verschiedenen Verfahren hergestellt werden und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der erfindungsgemäß bevorzugten Polyamide verlaufen meist über die Polykondensation in der Schmelze. Im Rahmen der vorliegenden Erfindung wird auch die hydrolytische Polymerisation von Lactamen als Polykondensation verstanden.

Erfindungsgemäß bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 2-Methylpentan-1,5-diamin, 1,9-Nonandiamin, 2,2,4- und 2,4,4-Trimethylhexamethylendiamin, die Isomeren Diamino-dicyclohexylmethan, Diaminodicyclohexylpropan, Bis-aminomethyl-cyclohexan, Phenylendiamin, Xylylendiamin, Aminocarbonsäuren, insbesondere Aminocapronsäure, oder die entsprechenden Lactame in Betracht. Copolyamide aus mehreren der genannten Monomeren sind eingeschlossen.

Erfindungsgemäß besonders bevorzugte Polyamide werden aus Caprolactam, ganz besonders bevorzugt aus ε-Caprolactam hergestellt.

Insbesondere besonders bevorzugt sind weiterhin die meisten auf PA6, PA66 und andere auf aliphatischen oder/und aromatischen Polyamiden bzw. Copolyamiden basierenden Compounds, bei denen auf eine Polyamidgruppe in der Polymerkette 3 bis 11 Methylengruppen kommen.

Als Komponente (2) wird Eisenoxalat eingesetzt.

Oxalat ist darin das thermisch aktivierbare reduzierende Anion das bei Temperaturen zwischen 100 und 450 °C, bevorzugt 150 bis 400 °C, besonders bevorzugt 200 bis 400 °C, Reaktionen mit einem Normalpotential bei 25 °C relativ zur Standardwasserstoffelektrode von weniger als 0 V, bevorzugt weniger als -0,15 V, besonders bevorzugt weniger als -0,3 V, mit ausreichender Reaktionsgeschwindigkeit eingeht. Als ausreichende Reaktionsgeschwindigkeiten werden im Sinne dieser Erfindung Reaktionsgeschwindigkeiten betrachtet, die über einen Zeitraum von einer Stunde zu einer Umsetzung von mindestens 10 Mol-%, bevorzugt mindestens 25 Mol-%, besonders bevorzugt mindestens 50 Mol-% des eingesetzten Stoffes, hier des thermisch aktivierbaren reduzierenden Anions, führen.

Insbesondere ganz besonders bevorzugt wird als Komponente (2) Eisen(II)oxalat-Dihydrat eingesetzt.

Bevorzugt wird die erfindungsgemäß einzusetzende Komponente (2) als Pulver, Paste oder Kompaktat eingesetzt. Bevorzugte Pulver der Komponente (2) weisen eine mittlere Partikelgröße d₅₀ von maximal 1000 µm, bevorzugt 0,1 bis 500 µm, besonders bevorzugt 0,5 bis 250 µm auf (gemäß ASTM D 1921-89, Methode A) wodurch die feine Verteilung im Thermoplasten gewährleistet wird. Wird die Komponente (2) als Paste oder Kompaktat eingesetzt, so können die üblicherweise für die Herstellung von Pasten oder Kompaktaten eingesetzten Bindemittel, bevorzugt Wachse, Öle, Polyglykole oder ähnliche Verbindungen gegebenenfalls auch in Kombinationen in geeigneten Mengenanteilen eingesetzt werden.

Als weitere Zusatzstoffe der Komponente (3) wird bevorzugt wenigstens ein Stoff der Reihe Thermostabilisatoren verschieden von Komponente (2), UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleitmittel, Entformungsmittel, Farbstoffe oder Pigmente eingesetzt. Die genannten und weitere geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden. Die als Komponente (3) einzusetzenden Zusatzstoffe können alleine oder in Mischung bzw. in Form von Masterbatchen eingesetzt werden.

Erfindungsgemäß bevorzugt als Zusatzstoff einzusetzende zusätzliche Thermostabilisatoren, die verschieden von Komponente (2) sind, sind Kupferverbindungen, insbesondere Kupferhalogenide in Kombination mit Alkalimetallhalogeniden, allein, Alkalimetallhalogenide und Erdalkalimetallhalogenide, bevorzugt Natriumchlorid und Calciumchlorid, Manganchlorid, sterisch gehinderte Phenole und/oder Phosphite, Phosphate, bevorzugt Dinatriumdihydrogendiphosphat, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen. Besonders bevorzugt wird als Thermostabilisator Kaliumbromid und/oder Kupfer(I)jodid eingesetzt, ganz besonders bevorzugt Kaliumbromid und Kupfer(I)jodid.

Erfindungsgemäß bevorzugt als Zusatzstoff einzusetzende UV-Stabilisatoren sind substituierte Resorcine, Salicylate, Benzotriazole oder Benzophenone.

Im Falle erfindungsgemäß als Komponente (3) bevorzugt einzusetzender Schlagzähmodifikatoren oder Elastomer-modifikatoren handelt es sich ganz allgemein um Copolymerisate, die bevorzugt aus mindestens zwei der folgenden Reihe an Monomeren aufgebaut sind: Ethylen, Propylen, Butadien, Isobuten, Isopren, Chloropren, Vinylacetat, Styrol, Acrylnitril und Acrylsäureester oder Methacrylsäureester mit 1 bis 18 C-Atomen in der Alkoholkomponente. Die Copolymerisate können kompatibilisierende Gruppen, bevorzugt Maleinsäureanhydrid oder Epoxid enthalten.

Erfindungsgemäß als Zusatzstoff bevorzugt einzusetzende Farbstoffe oder Pigmente sind anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, besonders bevorzugt Nigrosin oder Anthrachinone als Farbmittel sowie andere Farbmittel.

Erfindungsgemäß als Zusatzstoff bevorzugt einzusetzende Nukleierungsmittel sind Natrium- oder Calciumphenylphosphinat, Aluminiumoxid oder Siliziumdioxid oder Talkum, besonders bevorzugt Talkum.

Erfindungsgemäß als Zusatzstoff bevorzugt einzusetzende Gleit- und/oder Entformungsmittel sind langkettige Fettsäuren, insbesondere Stearinsäure, deren Salze, insbesondere Ca- oder Zn-Stearat sowie deren Esterderivate oder Amidderivate, insbesondere Ethylen-bis-stearylamid, Glyzerintristearat, Stearylstearat, Montanwachse, insbesondere Ester von Montansäuren mit Ethylenglycol sowie niedermolekulare Polyethylen- bzw. Polypropylenwachse in oxidierter und nicht-oxidierter Form. Erfindungsgemäß besonders bevorzugte Gleit- und/oder Entformungsmittel sind in der Gruppe der Ester oder Amide gesättigter oder ungesättigter aliphatischer Carbonsäuren mit 8 bis 40 C-Atomen mit gesättigten aliphatischen Alkoholen oder Aminen mit 2 bis 40 C-Atomen enthalten. In einer weiteren bevorzugten Ausführungsform enthalten die erfindungsgemäßen Formmassen Mischungen der oben genannten Gleit- und/oder Entformungsmittel.

Füll- und Verstärkungsstoffe als Komponente (4) im Sinne der vorliegenden Erfindung sind faserförmige, nadelförmige oder teilchenförmige Füll- und Verstärkungsstoffe. Bevorzugt sind Kohlenstofffasern, Glaskugeln, amorphe Kieselsäure, Calciumsilicat, Calciummetasilicat, Magnesiumcarbonat, Kaolin, calciniertes Kaolin, Kreide, gepulverter Quarz, Glimmer, Phlogopit, Bariumsulfat, Feldspat, Wollastonit, Montmorillonit oder Glasfasern, besonders bevorzugt Glasfasern, insbesondere bevorzugt Glasfasern aus E-Glas. Die faserformigen oder teilchenförmigen Verstärkungsstoffe sind in einer bevorzugten Ausführungsform zur besseren Verträglichkeit mit Thermoplasten mit geeigneten Oberflächenmodifizierungen, insbesondere Oberflächenmodifizierungen enthaltend Silanverbindungen versehen.

Ferner ist Gegenstand der vorliegenden Erfindung ein Verfahren zur Herstellung der erfindungsgemäßen thermoplastischen Formmassen dadurch gekennzeichnet, dass man die Komponenten (1) bis (3) sowie gegebenenfalls noch (4) in entsprechenden Gewichtsanteilen mischt. Vorzugsweise geschieht das Mischen der Komponenten bei Temperaturen von 220 bis 400°C durch gemeinsames Vermengen, Vermischen, Kneten, Compoundieren, Extrudieren oder Verwalzen der Komponenten, besonders bevorzugt durch Compoundieren auf einem gleichläufigen Zweiwellenextruder oder Buss-Kneter. Es kann vorteilhaft sein, einzelne Komponenten vorzumischen.

In einer bevorzugten Ausführungsform werden die erfindungsgemäßen Formmassen in einem zweistufigen Prozess hergestellt. Im ersten Schritt wird die Komponente (2) mit einem thermoplastischen Polymer zu einer Vormischung vermischt und auf eine Temperatur erhitzt, die oberhalb der Umsetzungstemperatur der Komponente (2) liegt. Es können auch andere Komponenten der erfindungsgemäßen thermoplastischen Formmasse in diesem Schritt mit der Komponente (2) und einem thermoplastischen Polymer vermischt werden. Bevorzugt wird dieser Schritt in einem gleichläufigen Zweiwellenextruder, Buss-Kneter oder Planetwalzenextruder durchgeführt.

Bevorzugt wird in diesem ersten Schritt die Komponente (2) in einem Polyamid, bevorzugt PA6 oder PA66, mit einer relativen Lösungsviskosität in m-Kresol von 2,8 bis 5,0, bevorzugt von 3,5 bis 4,5 umgesetzt.

Bevorzugt wird in diesem ersten Schritt die Vormischung aus thermoplastischem Polymer und Komponente (2) sowie gegebenenfalls weitere Komponenten auf eine Temperatur von 300 bis 400 °C, besonders bevorzugt 320 bis 390 °C, ganz besonders bevorzugt 330 bis 380 °C erhitzt.

Die Vormischung enthält im ersten Schritt in einer bevorzugten Ausführungsform neben dem Thermoplasten und der Komponente (2) zusätzlich mindestens einen Verarbeitungsstabilisator. Als Verarbeitungsstabilisator werden bevorzugt sterisch gehinderte Phenole und/oder Phosphite, Phosphate, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen eingesetzt.

Im ersten Schritt liegt der Anteil der Komponente (2) an der Vormischung bevorzugt bei 1 bis 60 Gew.-%, besonders bevorzugt bei 1 bis 30 Gew.-%, ganz besonders bevorzugt bei 2 bis 20 Gew.-%.

Die Vormischung wird bevorzugt in einem Zweiwellenextruder, Buss-Kneter oder Planetwalzenextruder umgesetzt, der mit einer Entgasungsfunktion ausgestattet ist, um die bei der Umsetzung der Komponente (2) entstehenden gasförmigen Komponenten abzuführen.

Alternativ kann die Komponente (2) in einem geeigneten Stoff der Komponenten (3) in einem Zweiwellenextruder, Busskneter oder anderen Apparat umgesetzt werden, der dazu geeignet ist, die Mischung auf Temperaturen oberhalb der Umsetzungstemperatur der Komponente (2) zu erhitzen. Auch ein diskontinuierliches Verfahren, bevorzugt in einem Rührautoklaven, ist im ersten Schritt anwendbar.

In einer alternativen bevorzugten Ausführungsform wird die Komponente (2) in Kombination mit einer oder mehreren Verbindungen eingesetzt, die die Umsetzungsgeschwindigkeit der Komponente (2) erhöhen. Dies hat zur Folge, dass die Umsetzung der Komponente (2) bei niedrigeren Temperaturen möglich ist. Derartige Verbindungen, auch als Aktivatoren bezeichnet, sind beispielsweise in US-A 4438223 beschrieben, deren Inhalt von der vorliegenden Erfindung vollumfänglich mit umfasst wird. Bevorzugt wird als Aktivator wenigstens eine Verbindung der Reihe Natrium- oder Kaliumhydrogencarbonat, Natrium- oder Kaliumacetat, Natrium- oder Kaliumcarbonat, Natrium- oder Kaliumchlorid, Natrium- oder Kaliumbromid, Natrium- oder Kaliumiodid, Natrium- oder Kaliumrhodanid oder Natrium- oder Kaliumbenzoat eingesetzt.

Im zweiten Schritt wird die Vormischung aus dem ersten Schritt mit den restlichen Komponenten der erfindungsgemäßen thermoplastischen Formmasse nach den oben beschriebenen Verfahren vermischt.

Die erfindungsgemäß herzustellenden thermoplastischen Formmassen können nach Verfahren, die dem Fachmann bekannt sind, insbesondere durch Spritzgießen, Extrudieren oder Blasformen verarbeitet werden.

Es kann vorteilhaft sein, Formteile oder Halbzeuge aus einer bei Raumtemperatur, bevorzugt 0 bis 40°C, hergestellten physikalischen Mischung, einem sogenannten Dryblend, vorgemischter Komponenten und/oder einzelner Komponenten direkt herzustellen.

Die erfindungsgemäß aus den Formmassen herzustellenden Formteile können bevorzugt in der Kraftfahrzeug-, Elektro-, Elektronik-, Telekommunikations-, Solar-, Informationstechnologie-, Computer-Industrie, im Haushalt, Sport, in der Medizin oder in der Unterhaltungsindustrie angewandt werden: Insbesondere können erfindungsgemäße Formmassen für Anwendungen eingesetzt werden, für die eine hohe Stabilität gegen Wärmealterung erforderlich ist. Bevorzugt für derartige Anwendungen ist die Verwendung für Formteile in Fahrzeugen, insbesondere in Kraftfahrzeugen (KFZ), insbesondere im KFZ-Motorraum. Die vorliegende Erfindung betrifft deshalb auch die Verwendung von thermoplastischen Formmassen enthaltend das erfindungsgemäß einzusetzende Stabilisatorsystem zur Herstellung von Formteilen und Artikeln mit erhöhter Stabilität gegen thermooxidative Schädigung und/oder photooxidativer Schädigung, bevorzugt von Formteilen für Kraftfahrzeuge (KFZ), insbesondere bevorzugt für den Motorraum von KFZs. Die erfindungsgemäßen thermoplastischen Formmassen sind außerdem auch für Anwendungen bzw. Formteile oder Artikel geeignet, wo zusätzlich zur thermooxidativen Stabilität eine Stabilität gegenüber photooxidativer Schädigung erforderlich ist, bevorzugt Solaranlagen.

Die Erfindung betrifft ferner die Verwendung der erfindungsgemäß herzustellenden Fasern, Folien oder Formkörper zur Herstellung von Artikeln für die Elektro-, Elektronik-, Telekommunikations-, Informationstechnologie-, Solar-, Computerindustrie, für den Haushalt, für den Sport, für medizinische Anwendungen oder für die Unterhaltungsindustrie, besonders bevorzugt für Kraftfahrzeuge, ganz besonders bevorzugt für den Motorraum von Kraftfahrzeugen.

### Beispiele

Zum Nachweis der Vorteile der erfindungsgemäßen Formmassen wurde zunächst eine Vormischung mit 5 % Eisenoxalat und anschließend die thermoplastischen Formmassen hergestellt. Bei Angaben in [%] handelt es sich stets um Gewichtsprozent.

### Herstellung einer Vormischung mit 5% Eisenoxalat

5 Gew.-% Eisenoxalat wurden mit 95 Gew.-% eines Polyamids PA6 A in einem Zweiwellenextruder des Typs ZSK 26 Compounder der Firma Coperion Werner & Pfleiderer (Stuttgart, Deutschland) bei einer Temperatur von ca. 370 °C gemischt, als Strang in ein Wasserbad ausgetragen, bis zur Granulierfähigkeit abgekühlt und granuliert. Das Granulat wurde zwei Tage bei 70°C im Vakuumtrockenschrank getrocknet.

### Herstellung der thermoplastischen Formmassen

Die einzelnen Komponenten wurden in einem Zweiwellenextruder des Typs ZSK 26 Compounder der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde zwei Tage bei 70°C im Vakuumtrockenschrank getrocknet.

**Tabelle 1: Zusammensetzungen der Formmassen (alle Angabe in Gew.-%).**

| **Inhaltsstoff** | **Vergl**.-**Bsp**. **1** | **Bsp. 1** |
|---|---|---|
| Glasfaser | 30,000 | 30,000 |
| PA6 B | 69,680 | 59,820 |
| Mikrotalkum | 0,020 | 0,020 |
| Montanesterwachs | 0,160 | 0,160 |
| Kaliumbromid | 0,100 | |
| Kupfer(I)iodid | 0,040 | |
| Vormischung 5% Eisenoxalat in PA6 A | | 10,000 |

### Verwendete Materialien:

PA6 A: Polyamid 6, linear mit einer relativen Lösungsviskosität einer 1%igen Lösung in m-Kresol von 4,0
PA6 B: Polyamid 6, linear mit einer relativen Lösungsviskosität einer 1%igen Lösung in m-Kresol von 2,9
Montanesterwachs, z.B. Licowax^{®} E von Clariant GmbH
Glasfasern, z.B. CS7928 von Lanxess Deutschland GmbH
Kaliumbromid, d₉₉ < 70 µm
Kupfer(I)-Iodid, d₉₉ < 70 µm
Eisenoxalat, beispielsweise Eisen(II)-oxalat Dihydrat von VWR International GmbH

## Patentansprüche

1. Thermoplastische Formmassen enthaltend
(1) 10 bis 99,85 Gew.-% eines thermoplastischen Polymers oder eine Kombination unterschiedlicher thermoplastischer Polymere,
(2) 0,05 bis 10 Gew.-% Eisenoxalat, und
(3) 0,1 bis 70 Gew.-% weiterer Inhaltsstoffe, wobei die Summe aller Gewichtsprozente stets 100 Gew.-% ergibt.

2. Thermoplastische Formmassen gemäß Anspruch 1, **dadurch gekennzeichnet, dass** als Komponente (2) Eisen(II)oxalat-Dihydrat eingesetzt wird.

3. Thermoplastische Formmassen gemäß der Ansprüche 1 oder 2, **dadurch gekennzeichnet, dass** als Komponente (1) Polyamide oder Polyester, bevorzugt semi-kristalline Polyamide oder semi-kristalline Polyester eingesetzt werden.

4. Thermoplastische Formmassen gemäß einem der Ansprüche 1 bis 3, **dadurch gekennzeichnet, dass** diese als Komponente (1) aliphatische oder semi-aromatische Polyamide, bevorzugt Polyamide hergestellt aus einem oder mehreren der Monomere ε-Caprolactam, Adipinsäure, Terephthalsäure, Hexamethylendiamin, Tetramethylendiamin, oder 2-Methylpentan-1,5-diamin, besonders bevorzugt PA6, PA66 oder ein Co-Polyamid von PA6 oder PA66 enthalten.

5. Thermoplastische Formmassen gemäß einem der Ansprüche 1 bis 4, **dadurch gekennzeichnet, dass** diese als Komponente (3) wenigstens ein Zusatzstoff der Reihe Thennostabilisatoren verschieden von Komponente (2), UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleitmittel, Entformungsmittel, Farbstoffe oder Pigmente enthalten.

6. Verwendung von Eisenoxalat zur Stabilisierung thermoplastischer Polymere sowie daraus herzustellender Fasern, Folien oder Formteile gegen thermooxidative und/oder photooxidative Schädigung.

7. Verwendung gemäß Anspruch 6, **dadurch gekennzeichnet, dass** es sich bei den Folien, Fasern oder Formteilen um Artikel für die Elektro-, Elektronik-, Telekommunikations-, Informationstechnologie-, Solar-, Computerindustrie, für den Haushalt, für den Sport, für medizinische Anwendungen oder für die Unterhaltungsindustrie, besonders bevorzugt für Kraftfahrzeuge, ganz besonders bevorzugt für den Motorraum von Kraftfahrzeugen handelt.

8. Fasern, Folien oder Formkörper **dadurch gekennzeichnet, dass** man diese durch Spritzgießen, Extrudieren oder Blasformen der thermoplastischen Formmassen gemäß der Ansprüche 1 bis 5 erhält.

9. Verfahren zur Herstellung thermoplastischer Formmassen nach einem der Ansprüche 1 bis 5 **dadurch gekennzeichnet, dass** die Komponenten (1) bis (3) in entsprechenden Gewichtsanteilen gemischt werden, bevorzugt bei einer Temperatur von 220 bis 400 °C, besonders bevorzugt durch Vermengen, Vermischen, Kneten, Compoundieren, Extrudieren oder Verwalzen.

10. Verfahren nach Anspruch 9, **dadurch gekennzeichnet, dass** in einem ersten Schritt die Komponente (2) mit einem thermoplastischen Polymer vorgemischt, die Vormischung auf eine Temperatur oberhalb der Umsetzungstemperatur der Komponente (2) erhitzt und anschließend die Vormischung mit den weiteren Komponenten der thermoplastischen Formmasse gemischt wird.

11. Verfahren zur Verringerung photooxidativer Schädigungen und/oder thermooxidativer Schädigungen thermoplastischer Polymere, bzw. an daraus herzustellenden Folien, Fasern oder Formteilen, **dadurch gekennzeichnet, dass** man Eisenoxalat dem thermoplastischen Polymer zusetzt.

## Claims

1. Thermoplastic moulding compositions comprising
(1) from 10 to 99.85% by weight of a thermoplastic polymer or a combination of different thermoplastic polymers,
(2) from 0.05 to 10% by weight of iron oxalate, and
(3) from 0.1 to 70% by weight of other ingredients, where the total of all of the percentages by weight is always 100% by weight.

2. Thermoplastic moulding compositions according to Claim 1, **characterized in that** iron(II) oxalate dihydrate is used as component (2).

3. Thermoplastic moulding compositions according to Claim 1 or 2, **characterized in that** polyamides or polyesters, preferably semicrystalline polyamides or semicrystalline polyesters, are used as component (1).

4. Thermoplastic moulding compositions according to any of Claims 1 to 3, **characterized in that** these comprise, as component (1), aliphatic or semi-aromatic polyamides, preferably polyamides produced from one or more of the following monomers: ε-caprolactam, adipic acid, terephthalic acid, hexamethylenediamine, tetramethylenediamine, or 2-methylpentane-1,5-diamine, particular preferably PA6, PA66 or a copolyamide of PA6 or PA66.

5. Thermoplastic moulding compositions according to any of Claims 1 to 4, **characterized in that** they comprise, as component (3), at least one additive from the group of heat stabilizers different from component (2), UV stabilizers, gamma-radiation stabilizers, hydrolysis stabilizers, antistatic agents, emulsifiers, nucleating agents, plasticizers, processing aids, impact modifiers, lubricants, mould-release agents, dyes or pigments.

6. Use of iron oxalate for the stabilizing of thermoplastic polymers, and also of fibres, foils or mouldings produced therefrom with respect to adverse thermal oxidative and/or photooxidative effects.

7. Use according to Claim 6, **characterized in that** the foils, fibres or moulds involve items for the electrical industry, electronics industry, telecommunications-industry, information technology industry, solar industry, or computer industry, for the household, for sports, for medical applications or for the consumer electronic industry, particularly preferably for motor vehicles, very particularly preferably for the engine compartment of motor vehicles.

8. Fibres, foils or mouldings, **characterized in that** these are obtained via injection moulding, extrusion or blow moulding of the thermoplastic moulding compositions according to Claims 1 to 5.

9. Process for the production of thermoplastic moulding compositions according to any of Claims 1 to 5, **characterized in that** components (1) to (3) are mixed in appropriate parts by weight, preferably at a temperature of from 220 to 400°C, particularly preferably via combining, mixing, kneading, compounding, extrusion or rolling.

10. Process according to Claim 9, **characterized in that** in a first step component (2) is premixed with a thermoplastic polymer, the premix is heated to a temperature above the reaction temperature of component (2) and then the premix is mixed with the other components of the thermoplastic moulding composition.

11. Process for the mitigation of adverse photooxidative and/or thermooxidative effects on thermoplastic polymers, or on foils, fibres or mouldings to be produced therefrom, **characterized in that** iron oxalate is added to the thermoplastic polymer.

## Revendications

1. Matières de moulage thermoplastiques, contenant
(1) 10 à 99,85 % en poids d'un polymère thermoplastique ou d'une combinaison de différents polymères thermoplastiques,
(2) 0,05 à 10 % en poids d'oxalate de fer et
(3) 0,1 à 70 % en poids d'autres composants, la somme de tous les pourcentages en poids étant toujours de 100 % en poids.

2. Matières de moulage thermoplastiques selon la revendication 1, **caractérisées en ce que** du dihydrate d'oxalate de fer (II) est utilisé en tant que composant (2).

3. Matières de moulage thermoplastiques selon la revendication 1 ou 2, **caractérisées en ce que** des polyamides ou des polyesters, de préférence des polyamides semi-cristallins ou des polyesters semi-cristallins, sont utilisés en tant que composant (1).

4. Matières de moulage thermoplastiques selon l'une quelconque des revendications 1 à 3, **caractérisées en ce que** celles-ci contiennent en tant que composant (1) des polyamides aliphatiques ou semi-aromatiques, de préférence des polyamides fabriqués à partir d'un ou de plusieurs des monomères ε-caprolactame, acide adipique, acide téréphtalique, hexaméthylènediamine, tétraméthylènediamine ou 2-méthylpentane-1,5-diamine, de manière particulièrement préférée PA6, PA66 ou un copolyamide de PA6 ou de PA66.

5. Matières de moulage thermoplastiques selon l'une quelconque des revendications 1 à 4, **caractérisées en ce que** celles-ci contiennent en tant que composant (3) au moins un additif de la série constituée par les thermostabilisateurs différents du composant (2), les stabilisateurs UV, les stabilisateurs de rayons gamma, les stabilisateurs d'hydrolyse, les antistatiques, les émulsifiants, les agents de nucléation, les plastifiants, les adjuvants d'usinage, les modificateurs de la résistance aux impacts, les lubrifiants, les agents démoulants, les colorants ou les pigments.

6. Utilisation d'oxalate de fer pour la stabilisation de polymères thermoplastiques, ainsi que de fibres, de feuilles ou de pièces moulées fabriquées à partir de ceux-ci, contre la dégradation thermo-oxydative et/ou photo-oxydative.

7. Utilisation selon la revendication 6, **caractérisée en ce que** les feuilles, les fibres ou les pièces moulées sont des articles pour l'industrie électrique, électronique, des télécommunications, des technologies d'information, solaire, informatique, pour la maison, pour le sport, pour des applications médicales ou pour l'industrie des divertissements, de manière particulièrement préférée pour les véhicules automobiles, de manière tout particulièrement préférée pour le compartiment moteur de véhicules automobiles.

8. Fibres, feuilles ou corps moulés, **caractérisés en ce que** ceux-ci sont obtenus par moulage par injection, extrusion ou moulage par soufflage des matières de moulage thermoplastiques selon les revendications 1 à 5.

9. Procédé de fabrication de matières de moulage thermoplastiques selon l'une quelconque des revendications 1 à 5, **caractérisé en ce que** les composants (1) à (3) sont mélangés en proportions en poids appropriées, de préférence à une température de 220 à 400 °C, de manière particulièrement préférée par amalgamage, mélange, malaxage, mélangeage, extrusion ou cylindrage.

10. Procédé selon la revendication 9, **caractérisé en ce que**, lors d'une première étape, le composant (2) est pré-mélangé avec un polymère thermoplastique, le pré-mélange est porté à une température supérieure à la température de réaction du composant (2), puis le pré-mélange est mélangé avec les autres composants de la matière de moulage thermoplastique.

11. Procédé de réduction des dégradations photo-oxydatives et/ou des dégradations thermo-oxydatives de polymères thermoplastiques, ou de feuilles, de fibres ou de pièces moulées fabriquées à partir de ceux-ci, **caractérisé en ce que** de l'oxalate de fer est ajouté au polymère thermoplastique.
